# EUROPÄISCHE PATENTSCHRIFT

(11) **EP 1 177 118 B1**
(45) Veröffentlichungstag und Bekanntmachung des Hinweises auf die Patenterteilung: **22.10.2003**
(21) Anmeldenummer: 00943594.2
(22) Anmeldetag: 11.05.2000
(51) Int. Cl.: B60R 21/22, B60R 21/16

(54) **AUFBLASBARER GASSACK FÜR EINE AIRBAGEINHEIT**
INFLATABLE AIRBAG MODULE FOR AN AIRBAG UNIT
SAC A GAZ GONFLABLE POUR ENSEMBLE COUSSIN GONFLABLE DE SECURITE

(30) Priorität: 12.05.1999 DE 19922994
(43) Veröffentlichungstag der Anmeldung: 06.02.2002
(73) Patentinhaber: Takata-Petri AG, 63743 Aschaffenburg (DE)
(72) Erfinder: WEBERT, Thomas, D-97833 Habichtsthal (DE)
(74) Vertreter: Baumgärtel, Gunnar, Dr.
(86) Internationale Anmeldenummer: DE0001525
(87) Internationale Veröffentlichungsnummer: WO00068042

(56) Entgegenhaltungen:
- DE-A- 19 707 347
- DE-A- 19 724 191
- US-A- 5 335 936
- PATENT ABSTRACTS OF JAPAN vol. 016, no. 044 (M-1207), 4. Februar 1992 (1992-02-04) & JP 03 248944 A (IKEDA BUSSAN CO LTD), 6. November 1991 (1991-11-06)

## Beschreibung

Die Erfindung betrifft einen aufblasbaren Gassack für eine Airbageinheit nach dem Oberbegriff des Patentanspruchs 1.

In der DE 196 54 490 A1 ist ein Gassack für eine Seitenairbageinheit von vorzugsweise schlauchartiger Form beschrieben, der an mindestens zwei Stellen mit der Kraftfahrzeugkarosserie in Verbindung steht und der im unaufgeblasenen Zustand in einem gewölbten Stauraum untergebracht ist. Zwischen dem Gassack und einer Befestigungsstelle am Kraftfahrzeug ist ferner mindestens ein längliches Straff- oder Spannelement (im folgenden als Straffleine bezeichnet) vorgesehen, das beim Aufblasen des Gassackes straffbar ist. Hierdurch wird die Ausbreitung des Gassackes beim Aufblasen begrenzt.

Mittels einer solchen Straffleine kann ferner verhindert werden, daß bei einem Crash Fahrzeuginsassen durch ein geöffnetes Fenster bzw. ein beim Crash zerstörtes Fenster hindurch aus dem Wagen geschleudert werden oder daß nach einem Crash einzelne Körperteile eines Fahrzeuginsassen durch ein Fenster herausragen und somit einer entsprechend großen Verletzungsgefahr unterliegen. Hierzu ist es aber erforderlich, daß die Straffleine bei einem Crash auch nach dem Aufblasen des Gassackes gespannt bleibt.

Aus der gattungsbildenden DE 197 07 347 A1 ist ein aufblasbarer Gassack für eine Airbageinheit mit mindestens einer Straffleine bekannt, die an einer Fahrzeugkarosserie befestigbar und beim Aufblasen des Gassackes straffbar ist und die die Ausbreitung des Gassackes beim Aufblasen begrenzt, wobei die Straffleine in mindestens einem Bereich über eine Rücklaufsperre derart mit dem Gassack in Wirkverbindung steht (wenn die Airbageinheit in ein Kraftfahrzeug eingebaut ist), daß sich beim Aufblasen des Gassackes die Straffleine und der Gassack in diesem Bereich entlang einer ersten Richtung relativ zueinander bewegen können und daß nach dem Aufblasen des Gassackes eine Relativbewegung von Straffleine und Gassack entlang einer der ersten Richtung im wesentlichen entgegengesetzten zweiten Richtung verhindert wird. Als Rücklaufsperre dienen dabei zwei Keile, von denen der eine als fester Keil ausgebildet und auf seiner Keilfläche mit Riefen versehen ist und von denen der andere mittels einer Zugfeder beweglich gelagert ist. Diese Rücklaufsperre ist zwar in ihrer Funktion sehr zuverlässig und sicher; sie weist jedoch ein vergleichsweise großes Gewicht sowie einen entsprechenden Platzbedarf auf.

Der Erfindung liegt das Problem zugrunde, einen aufblasbaren Gassack für eine Airbageinheit der eingangs genannten Art zu schaffen, dessen Straffleine mit einfachen Mitteln auch nach dem Aufblasen des Gassackes in einem gespannten Zustand verbleibt.

Diese Aufgabe wird erfindungsgemäß durch die Schaffung eines Gassackes für eine Airbageinheit mit den Merkmalen des Patentanspruches 1 gelöst.

Danach ist vorgesehen, daß die Straffleine und der Gassack über mindestens ein Haftflächenpaar zuammenwirken und daß das Haftflächenpaar zwei verformbare Flächenelemente in Form einer Hakenfläche und einer Gegenfläche umfaßt, von denen die eine dem Gassack und die andere der Straffleine zugeordnet ist und die bei der Relativbewegung entlang der ersten Richtung aneinander vorbei gleiten, während sie bei der Relativbewegung entlang der zweiten Richtung miteinander in Eingriff treten.

Die erfindungsgemäße Lösung hat den Vorteil, daß sie sich mit kostengünstigen Mitteln realisieren läßt, und zwar ohne die Verwendung schwerer Teile, die in einem Crashfall zu Verletzungen bei einem Fahrzeuginsassen führen könnten.

Eine Rücklaufsperre wird hierbei durch ein Haftflächenpaar (nach Art eines Klettverschlusses) gebildet, das zwei elastische, deformierbare Flächenelemente in Form einer Hakenfläche und einer Gegenfläche umfaßt.

Die beiden dem Gassack einerseits und der Straffleine andererseits zugeordneten Flächenelemente können dabei sowohl eine unterschiedliche als auch eine übereinstimmende Ausdehnung entlang der Erstreckungsrichtung der Straffleine aufweisen. Im erstgenannten Fall kann sich das der Straffleine zugeordnete Flächenelement über eine größere Länge, insbesondere im wesentlichen über die gesamte Länge der Straffleine erstrecken, um bei einer Rückstellbewegung einen zuverlässigen Eingriff der beiden Flächenelemente zu gewährleisten.

Gemäß einer Variante der Erfindung ist vorgesehen, daß die Haken der Hakenfläche derart geneigt in bezug auf die Gegenfläche verlaufen, daß sie bei der Relativbewegung entlang der ersten Richtung über die Gegenfläche gleiten, während sie bei der Relativbewegung entlang der zweiten Richtung in die Gegenfläche eingreifen.

Nach einer anderen Variante der Erfindung verläuft zwischen der Hakenfläche und der Gegenfläche ein Gleitelement, das eine Relativbewegung der beiden Flächenelemente gestattet und das einen Anschlag aufweist, auf den bei einer Relativbewegung entlang der zweiten Richtung (Rückstellbewegung nach dem Aufblasen des Gassackes) eines der Flächenelemente derart einwirkt, daß das Gleitelement deformiert wird und die beiden Flächenelemente (Hakenfläche und Gegenfläche) miteinander in Eingriff treten können.

Vorzugsweise liegt das Gleitelement im gefalteten Zustand des Gassackes in der Umgebung seines Anschlages auf dem der Straffleine zugeordneten Flächenelement auf und ist derart ausgebildet, daß beim Aufblasen des Gassackes das der Straffleine zugeordnete Flächenelement hinter das Gleitelement führbar ist und daß bei der Rückstellbewegung nach dem Aufblasen des Gassackes das der Straffleine zugeordnete Flächenelement auf den Anschlag des Gleitelements auffahren kann.

Das Gleitelement selbst ist vorzugsweise als Gleithülle ausgebildet, die die Straffleine umgibt, und weist einen Anschlag auf, der die Deformation des Gleitelementes erleichtert.

Der Rücklauf der Straffleine nach dem Aufblasen des Gassackes wird besonders zuverlässig verhindert, wenn auf der Straffleine zwei Flächenelemente angeordnet sind, deren mit Haftelementen versehene Oberflächen in entgegengesetzte Richtungen weisen und denen jeweils ein Flächenelement auf dem Gassack zugeordnet ist. Hierzu kann die Oberfläche des Gassackes mit einer Tasche versehen sein, in der die dem Gassack zugeordneten Flächenelemente angeordnet sind und in der sich der mit den Flächenelementen versehene Abschnitt der Straffleine erstreckt.

Wenn die Straffleine an einer Stelle des Gassackes fest mit diesem verbunden ist und hiervon beabstandet in einem anderen Bereich über die vorstehend erläuterte Rücklaufsperre (also z.B. über ein Haftflächenpaar) mit diesem in Wirkverbindung steht, dann läßt sich der Gassack beim Aufblasen zwischen der genannten Befestigungsstelle und der Rücklaufsperre mittels der Straffleine spannen, wobei die Rücklaufsperre sicherstellt, daß die Spannung der Straffleine und des Gassackes auch nach dem Aufblasen des Gassackes erhalten bleiben.

Dadurch, daß gemäß der vorliegenden Erfindung die Straffleine auch nach dem Aufblasen des Gassackes gespannt bleibt, kann für einen Fahrzeuginsassen (im Fall eines Seitenairbags) das Öffnen der Fahrzeugtür oder auch das Verlassen des Fahrzeugs durch eine seitliche Fensterscheibe nach einem Unfall erschwert werden. Ebenso können hierdurch Rettungsarbeiten behindert werden, bei denen der Zugang zum Fahrzeug durch eine Fahrzeugtür oder eine Fensterscheibe erfolgen soll.

Um diese Nachteile zu beseitigen, sind an der Straffleine Mittel vorgesehen, mittels derer die Spannung aus der Straffleine herausgenommen werden kann.

Hierzu kann zum einen vorgesehen sein, daß die Straffleine oder ein Befestigungsmittel, das zur Befestigung der Straffleine dient, einen Schwächungsbereich aufweist, der einerseits den beim Aufblasen des Gassackes auftretenden Kräften standhalten kann und der andererseits durch das Aufbringen bestimmter, vorgebbarer Kräfte die Herausnahme der Spannung aus der Straffleine ermöglicht. Der Schwächungsbereich kann insbesondere als Sollbruchstelle ausgebildet sein, die beim Aufbringen einer definierten Kraft bricht.

Zur Bildung der Sollbruchstelle kann beispielsweise die Straffleine perforiert werden oder aus zwei Teilen bestehen, die über ein weiteres, mit einer Sollbruchstelle versehenes Bauelement miteinander verbunden sind. Schließlich kann die Sollbruchstelle auch in einem Befestigungselement vorgesehen sein, über das die Straffleine mit dem Gassack oder mit der Fahrzeugkarosserie verbunden ist.

Anstatt einen Schwächungsbereich vorzusehen, kann ein lösbares Befestigungsmittel benutzt werden, über das die Straffleine mit der Fahrzeugkarosserie oder über das zwei Teile der Straffleine untereinander verbunden sind. Dieses Befestigungsmittel wird nach einem Crash gelöst, um die Spannung aus der Straffleine herauszunehmen. Als lösbares Befestigungsmittel eignet sich beispielsweise ein Klettverschluß.

Weitere Vorteile der Erfindung werden bei der nachfolgenden Beschreibung von Ausführungsbeispielen anhand der Figuren deutlich werden.

Es zeigen:
- Fig. 1 -: einen Seitenairbag mit zwei Straffleinen;
- Fig. 2a -: eine Seitenansicht einer Straffleine mit zwei Haftflächen;
- Fig. 2b -: einen Längsschnitt durch die Straffleine aus Fig. 2a;
- Fig. 2c -: ein Detail aus Fig. 2b;
- Fig. 3a -: einen Querschnitt durch einen Abschnittes eines Gassackes, der mit einer Tasche versehen ist, in der der Gassack und eine Straffleine über ein Haftflächenpaar zusammenwirken;
- Fig. 3b -: eine Draufsicht auf den Abschnitt des Gassackes aus Fig. 3a;
- Fig. 3c -: einen Längsschnitt durch den Abschnitt des Gassackes aus Fig. 3a;
- Fig. 3d -: ein Detail aus der Darstellung gemäß Fig. 3c;
- Fig. 4a-4c -: die Wechselwirkung des Gassackes und der Straffleine aus den Figuren 3a bis 3d während des Aufblasens des Gassackes und danach;
- Fig. 5a -: eine Seitenansicht einer Abwandlung des Ausführungsbeispiels aus den Fig. 3a bis 3d;
- Fig. 5b -: einen Schnitt durch die Darstellung gemäß Fig. 5a;
- Fig. 5c -: ein Detail der Darstellung gemäß Fig. 5b;
- Fig. 6a -: eine zweiteilige Straffleine, deren beide Teile über ein Kunststoffelement miteinander verbunden sind, das eine Sollbruchstelle aufweist;
- Fig. 6b -: eine Straffleine mit einer Perforation;
- Fig. 6c -: eine zweiteilige Straffleine, deren beide Teile über eine Naht miteinander verbunden sind;
- Fig. 6d -: eine Befestigungsstelle, an der eine Straffleine mit der Karosserie eines Kraftfahrzeugs verbunden ist;
- Fig. 7 -: eine zweiteilige Straffleine, deren beide Teile über einen Klettverschluß miteinander verbunden sind.

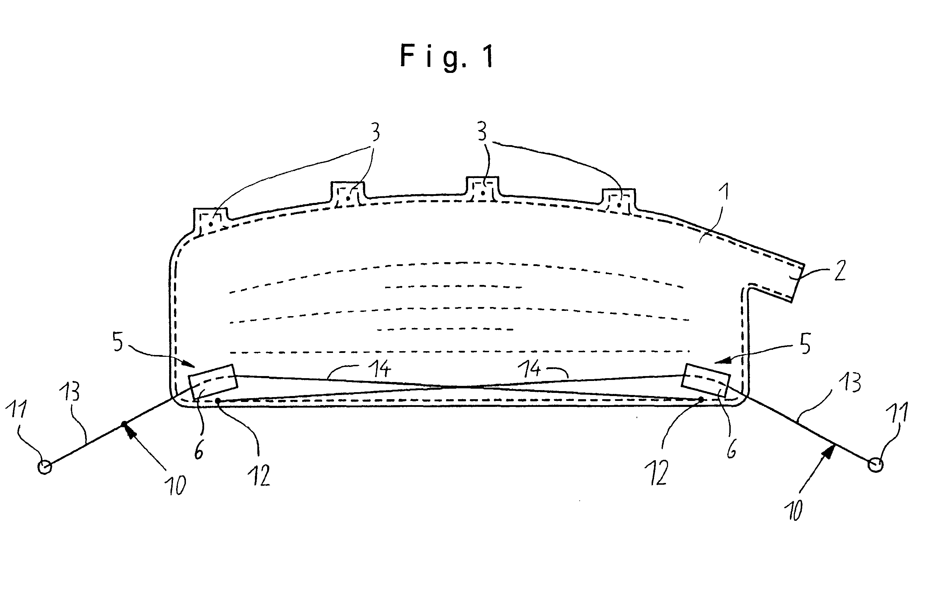

In Fig. 1 ist ein Gassack einer Seitenairbageinheit im aufgeblasenen Zustand dargestellt. Der Gassack 1 umfaßt eine Einblasöffnung 2, in die mittels eines Gasgenerators in bekannter Weise in einem Crashfall Gas in den Gassack 1 eingeleitet werden kann, sowie mehrere Befestigungsstellen 3, über die der Gassack oberhalb einer Kraftfahrzeugtür an der Karosserie befestigbar ist.

In seinen beiden unteren seitlichen Endabschnitten 5 weist der Gassack jeweils eine Tasche 6 auf, in der eine Straffleine 10 geführt ist. Die beiden Straffleinen 10 sind jeweils an einem Ende über eine Befestigungsstelle 11 mit der Fahrzeugkarosserie verbunden und an ihrem anderen Ende über eine Befestigungsstelle 12 an dem Gassack 1 befestigt. Dabei befindet sich die gassackseitige Befestigungsstelle 12 jeder Straffleine 10 in dem unteren seitlichen Endbereich 5 des Gassackes 1, in dem die Tasche 6 für die jeweils andere Straffleine 10 vorgesehen ist. Aufgrund dieser Anordnungen der Befestigungsstellen 11, 12 und der Taschen 6 für die Straffleinen 10 überkreuzen sich diese oberhalb des Gassackes 1. Ferner werden die Straffleinen 10 durch die Taschen 6 jeweils in einen ersten Abschnitt 13 unterteilt, der sich von der fahrzeugseitigen Befestigungsstelle 11 bis zu der Tasche 6 erstreckt, und in einen zweiten Abschnitt 14, der sich von der Tasche 6 zu der gassackseitigen Befestigungsstelle 12 erstreckt.

Die Straffleinen 10 wurden beim Aufblasen des Gassackes 1 automatisch gespannt, wodurch der Gassack 1 verkürzt und dessen Ausdehnung begrenzt wurde. Nähere Einzelheiten hierzu können der DE 196 54 490 A1 entnommen werden, in der im Detail beschrieben ist, wie sich die Ausdehnung eines Gassackes mittels einer Straffleine begrenzen läßt, die beim Aufblasen des Gassackes automatisch gespannt wird. Es sei jedoch darauf hingewiesen, daß die vorliegende Erfindung unabhängig davon ist, mit welchen Mittel die Straffleine gespannt wird.

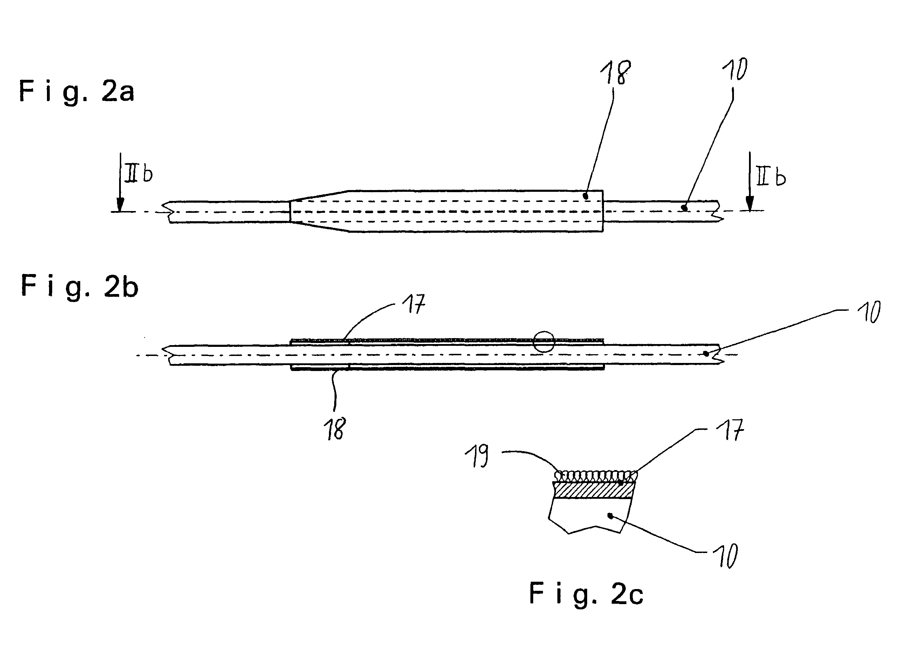

Um die Spannung der Straffleinen 10 auch nach dem Aufblasen des Gassackes 1 zu beizubehalten, sind gemäß der vorliegenden Erfindung Rücklaufsperren in den Taschen 6 vorgesehen. In diesen Taschen 6 stehen die Straffleinen 10 über Haftflächenpaare mit dem Gassack 1 in Wirkverbindung, wie im folgenden anhand der Figuren 2a bis 5c im einzelnen erläutert werden wird.

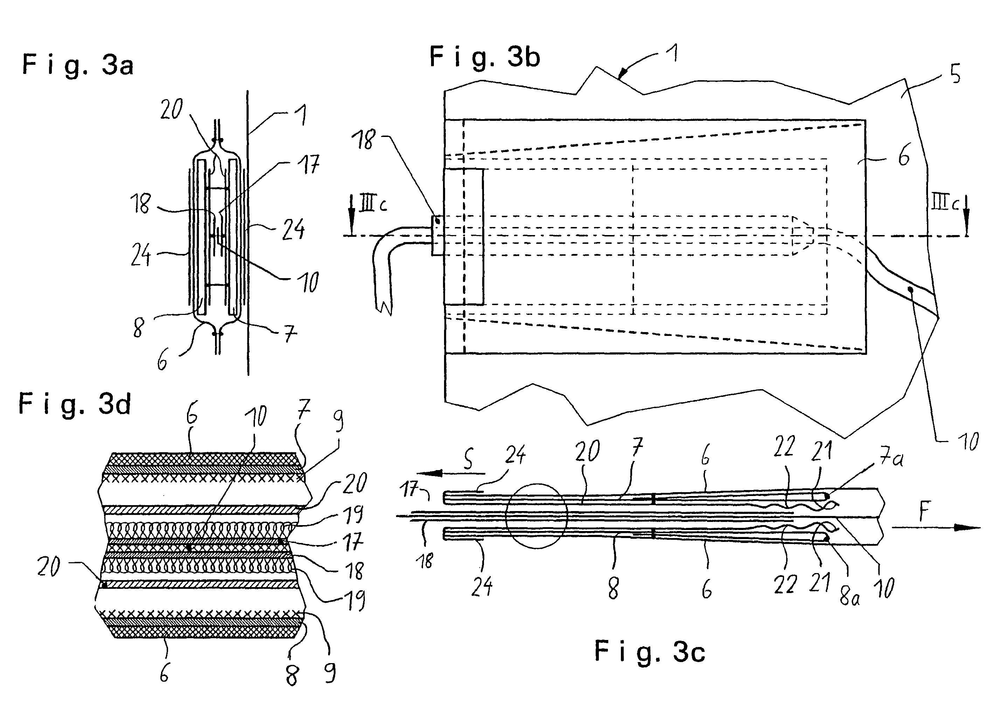

In den Figuren 2a bis 2c ist ein Abschnitt einer Straffleine 10 dargestellt, auf dem zwei Flächenelemente 17, 18 angebracht sind, die mit jeweils einem Flächenelement auf einem Gassack nach Art eines Haftflächenpaares (Klettverschlusses) zusammenwirken können (s. Figuren 3a bis 3d) und deren hierzu mit einer entsprechenden Haftfläche 19 versehene Oberflächen in entgegengesetzte Richtungen weisen.

Hinsichtlich der konkreten geometrischen Ausgestaltung der in den Figuren 2a bis 2c dargestellten Flächenelemente ist eine Vielzahl von Varianten dankbar; insbesondere kommen eine röhren- oder schlauchförmige Ausbildung in Betracht.

In den Figuren 3a bis 3d ist ein mit einer Tasche 6 versehener seitlicher Endbereich 5 des Gassackes 1 aus Fig. 1 dargestellt, wobei sich durch die Tasche 6 der in den Figuren 2a bis 2c dargestellte Abschnitt einer Straffleine 10 erstreckt.

Die an dem Gassack 1 befestigte Tasche 6 ist auf zwei einander gegenüberliegenden inneren Oberflächen mit jeweils einem Flächenelement 7, 8 versehen, auf dem eine Vielzahl von Haken 9 angeordnet ist. Die beiden Flächenelemente 7,8 der Tasche 6 liegen jeweils einem Flächenelement 17 bzw. 18 der Straffleine 10 gegenüber, wobei den Haken 9 jedes der Flächenelemente 7, 8 eine entsprechend gestaltete Haftfläche 19 der Flächenelemente 17, 18 zugeordnet ist, so daß die Flächenelemente 7, 17 und 8, 18 jeweils ein Haftflächenpaar bilden, das nach Art eines Klettverschlusses gestaltet ist. Selbstverständlich könnten dabei auch die mit den Haken 9 versehenen Flächenelemente auf der Straffleine 10 vorgesehen sein und dementsprechend die Haftflächen 19 den Innenseiten der Tasche 6 zugeordnet sein.

Die Haftflächenpaare 7, 17 und 8, 18 stehen hier aber nicht in unmittelbarem Kontakt miteinander, da die Straffleine 10 von einer Gleithülle 20 umgeben ist, die mit einem Ende 24 um die Tasche 6 herumgelegt ist und die die Flächenelemente 17, 18 auf der Straffleine 10 von den Flächenelementen 7, 8 auf der Tasche 6 trennt. Die Straffleine 10 kann daher problemlos innerhalb der Gleithülle 10 in der Freilaufrichtung F verschoben werden, so daß die Straffleine 10 beim Aufblasen des Gassackes 1 gespannt werden kann.

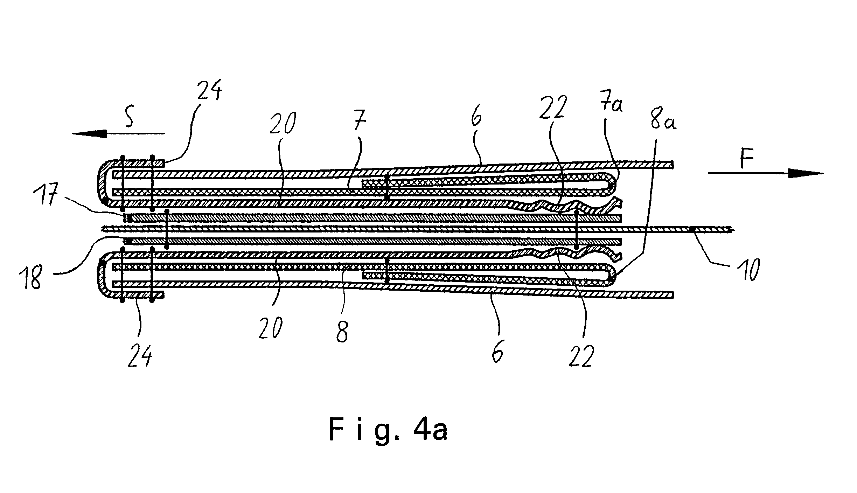

An ihrem dem abgewinkelten Abschnitt 24 abgewandten Ende weist die Gleithülle 20 einen Endabschnitt 22 auf, der in Fig. 3c wellenförmig dagestellt ist und der zugleich einen Anschlag 21 für die Straffleine 10 bildet, dessen Funktion nachfolgend anhand der Figuren 4a bis 4c noch näher erläutert werden wird. (Die wellenförmige Darstellung des Endabschnittes 22 soll insbesondere dessen Verformbarkeit symbolisieren, vergl. Figuren 4a bis 4c; in praxe wird dieser Abschnitt vor dem Aufblasen des Gassackes üblicherweise keine Verformungen aufweisen.) Im Bereich des Endabschnitts 22 der Gleithülle 20 liegen die beiden Flächenelemente 7, 8 der Tasche 6 mit ihrem jeweiligen Endabschnitt 7a, 8a auf der Gleithülle 20 auf und drücken diese mit ihrem Endabschnitt 22 gegen die Flächenelemente 17, 18 der Straffleine 10. Die Gleithülle 20 verhindert demnach den Kontakt zwischen den mit Haken 9 versehenen Flächenelementen 7, 8 der Tasche 6 und den zugehörigen Flächenelementen 17, 18 der Straffleine 10.

Anhand der Figuren 4a bis 4c wird nun im einzelnen erläutert werden, wie sich beim Aufblasen des Gassackes 1 die Straffleine 10 durch eine Bewegung entlang der Freilaufrichtung F spannt und wie nach dem Aufblasen des Gassackes 1 eine gegenläufige Bewegung der Straffleine 10 relativ zu dem Gassack 1 entlang der Richtung S verhindert wird.

Fig. 4a zeigt dabei die Lage der Straffleine 10 in der Tasche 6 des Gassackes zu einem frühen Zeitpunkt beim Aufblasen des Gassackes. Es handelt sich hierbei im wesentlichen um eine vergrößerte Darstellung der bereits vorstehend beschriebenen Figur 3c, so daß hier auf eine nähere Beschreibung der Fig. 4a verzichtet werden kann.

Es sei lediglich nochmals darauf hingewiesen, daß bei der in Fig. 4a dargestellten Position der Straffleine 10 in der Tasche 6 die Endabschnitte 7a, 8a der auf der Tasche 6 befestigten Flächenelemente 7, 8 im Bereich des Endabschnitts 22 der Gleithülle 20 angeordnet sind.

Wird der Gassack weiter aufgeblasen, so bewegt sich die Straffleine 10 in der Tasche 6 relativ zu dem Gassack entlang der Freilaufrichtung F, wobei die Straffleine weiter gespannt wird. Das Spannen einer Straffleine beim Aufblasen eines Gassackes ist in der DE 196 54 490 A1 detailliert beschrieben, auf die diesbezüglich Bezug genommen wird. Vorliegend soll demgegenüber insbesondere erläutert werden, wie die Straffleine 10 nach dem Aufblasen des Gassackes in ihrer gespannten Position arretiert wird.

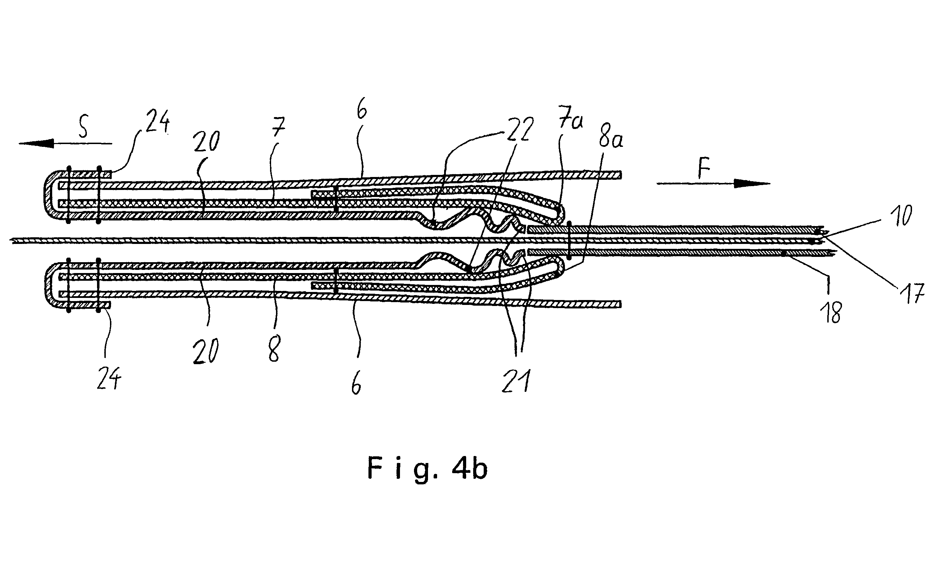

Durch die Bewegung entlang der Freilaufrichtung F beim Aufblasen des Gassackes gerät der mit den Flächenelementen 17, 18 versehene Abschnitt der Straffleine 10 zumindest teilweise hinter die Gleithülle 20, wobei er sich in dem in Fig. 4b gezeigten Fall sogar vollständig hinter die Gleithülle 20 bewegt hat. Mit anderen Worten ausgedrückt, befindet sich der mit den Flächenelementen 17, 18 versehene Abschnitt der Straffleine 10 nach dem Aufblasen des Gassackes derart außerhalb der Gleithülle 20, daß die hinteren Enden der Flächenelemente 17, 18 dicht hinter dem Endabschnitt 22 des Gleitelements 20 angeordnet sind.

Nach dem vollständigen Aufblasen des Gassackes hat der Gassack die Tendenz, sich wieder zu entspannen, und löst hierdurch bzw. durch die Belastung eines vom Gassack aufgefangenen Insassen eine Relativbewegung zu der Straffleine 10 aus. Dabei bewegt sich die Straffleine 10 mit ihren Flächenelementen 17, 18 relativ zu dem seitlichen Endbereich 5 des Gassackes in der Tasche 6 entgegen der Freilaufrichtung F in Richtung auf ihre Ausgangsposition, d.h. entlang der Sperrichtung S

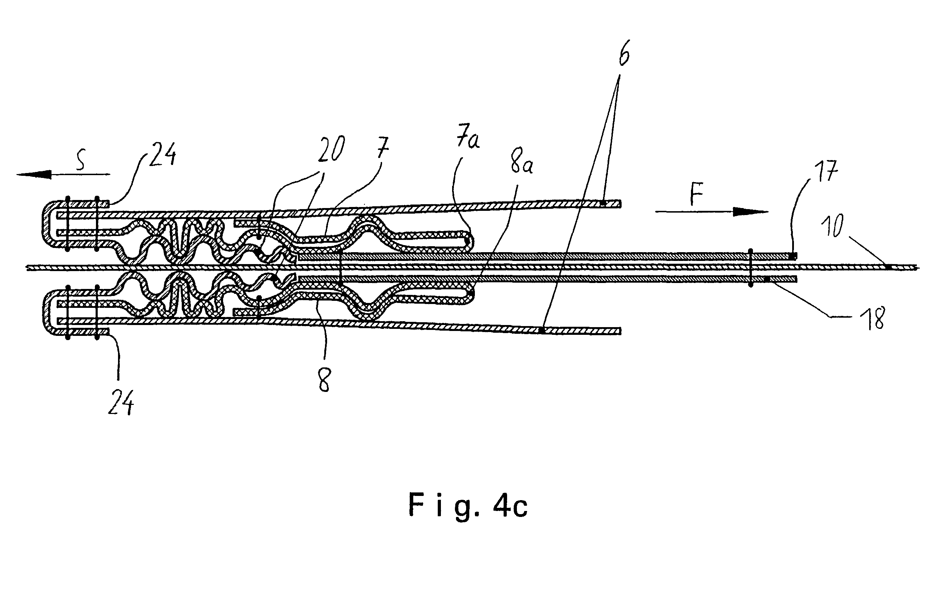

Bei der Rücklaufbewegung der Straffleine 10 entlang der Sperrichtung S wird die Gleithülle 20 aufgrund ihrer widerstandsbildenden Strukturen bzw. Oberflächen in ihrem Endbereich 22 (der einen Anschlag 21 für die Flächenelemente 17, 18 bildet) ebefalls in Sperrichtung S geschoben. Dabei wird der Endabschnitt 22 zunehmend deformiert und weiter entlang der Sperrichtung S verschoben, wie anhand der Figuren 4b und 4c erkennbar ist.

Gleichzeitig legen sich die Endabschnitte 7a, 8a der an der Tasche 6 befestigten und mit Haken versehenen Flächenelemente 7, 8 an die zugehörigen Flächenelemente 17, 18 der Straffleine 10 an. Es kommt dann zu einer Verriegelung der Haftflächenpaare 7, 17 und 8, 18 nach Art eines Klettverschlusses, die eine weitere Bewegung der Straffleine 10 relativ zu der Tasche 6 entlang der Sperrichtung S verhindert. Diese Sperrwirkung wird noch unterstützt durch die anhand Fig. 4c erkennbare Verformung der Gleithülle 20, die durch die trichterförmige Ausbildung der Tasche 6 unterstützt wird und die zu einer gegenseitigen Verwindung der Gleithülle 20 und der Flächenelementen 7, 8 der Tasche 6 führt.

Die auf den straffleinenseitgen Flächenelementen 17, 18 aufliegenden Endabschnitte 7a, 8a der gassackseitigen Flächenelemente 7, 8 sind doppelt gelegt. Wegen dieser Doppelung erstrecken sich die auf den gassackseitigen Flächenelementen 7, 8 angeordneten Haken 9 (vgl. Fig. 3d) auch auf der den straffleinenseitigen Flächenelementen 17, 18 abgewandten Seite. Dies bewirkt, daß die Verhakung der Haftflächenpaare 7, 17; 8, 18 auch bei einem eventuellen Umstülpen der Endbereiche 7a, 8a fortbesteht. Zudem kann durch die Doppelung und ggf. weitere dort eingelegte Elemente eine Versteifung der Endbereiche 7a, 8a erreicht werden. Hierdurch wird sichergestellt, daß es zu einem großflächigen Eingriff zwischen den Flächenelementen 7, 8 der Tasche 6 und den Flächenelementen 17, 18 der Straffleine 10 kommt.

Insgesamt wird hier mittels einer Rücklaufsperre verhindert, daß sich die Straffleine nach dem Aufblasen des Gassackes durch eine Bewegung entlang der Richtung S wieder entspannt. Daher bleiben sowohl die Straffleine als auch der Gassack nach Abschluß des Aufblasens des Gassackes weiterhin gestrafft.

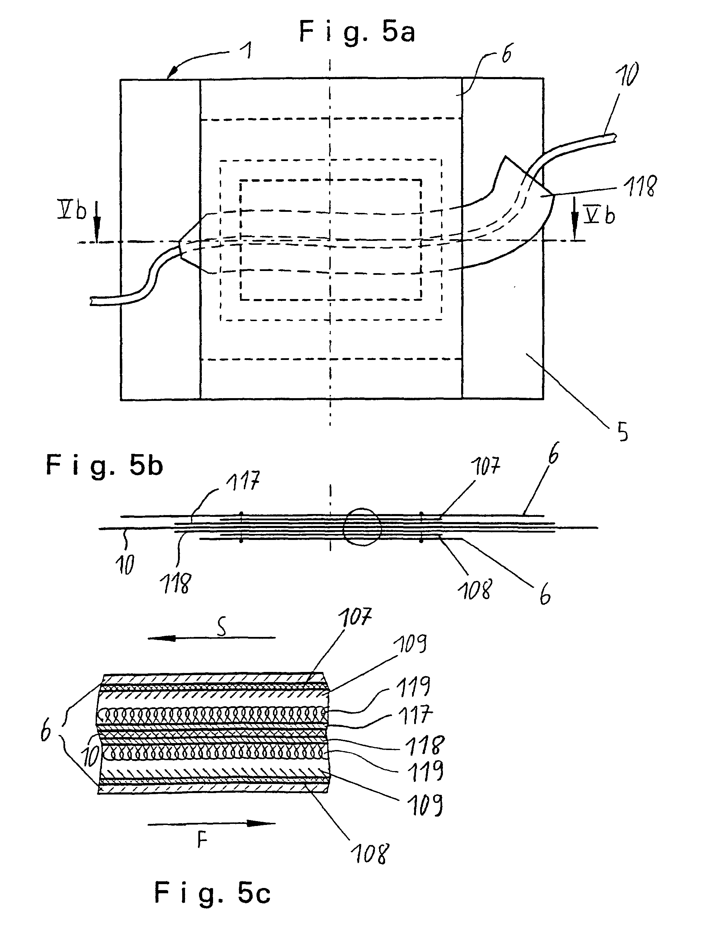

Ein weiteres Ausführungsbeispiel der Erfindung ist anhand der Figuren 5a bis 5c dargestellt. Die Straffleine 10 weist hierbei einen identischen Aufbau auf, wie bei dem Ausführungsbeispiel gemäß den Figuren 3 und 4. Insbesondere sind auf der Straffleine 10 zwei Flächenelemente 117, 118 angeordnet, deren Haftflächen 119 zur Bildung eines Haftflächenpaares mit einer entsprechenden Verhakungsfläche dienen. Dementsprechend ist jedem der Flächenelemente 117, 118 ein entsprechendes, mit Haken 109 versehenes Flächenelement 107, 108 auf der Innenseite einer Tasche 6 des Gassackes 1 zugeordnet.

Die Haken 109 der Flächenelemente 107, 108 der Tasche 6 verlaufen dabei derart geneigt zu der Straffleine 10, daß sich die Straffleine 10 relativ zu der Tasche 6 ohne weiteres entlang der Freilaufrichtung F bewegen kann. In der entgegengesetzten Richtung, d.h. der Sperrichtung S, ist demgegenüber keine Bewegung der Straffleine 10 in der Tasche 6 möglich; denn bei einer solchen Bewegung greifen die Haken 109 der Flächenelemente 107, 108 in die entsprechenden Gegenflächen (Haftflächen 119) der auf der Straffleine 10 vorgesehenen Flächenelemente 117, 118 ein. Es wird hier also mit anderen Mitteln die gleiche Wirkung erzielt wie bei dem anhand der Figuren 3 und 4 dargestellten Ausführungsbeispiel der Erfindung.

Mit der erfindungsgemäßen Lösung läßt sich bei Anwendung auf einen Seitenairbag insbesondere verhindern, daß bei einem Unfall ein Fahrzeuginsasse aus einem geöffneten bzw. bei dem Unfall zerstörten Fenster herausgeschleudert werden kann.

Gleichzeit besteht aber das Problem, daß durch die andauernde Straffung der Straffleine und des Gassackes Rettungsarbeiten behindert werden können. Insbesondere kann die Bergung von Fahrzeuginsassen durch eine Fahrzeugtür oder ein Fenster hindurch erheblich erschwert werden.

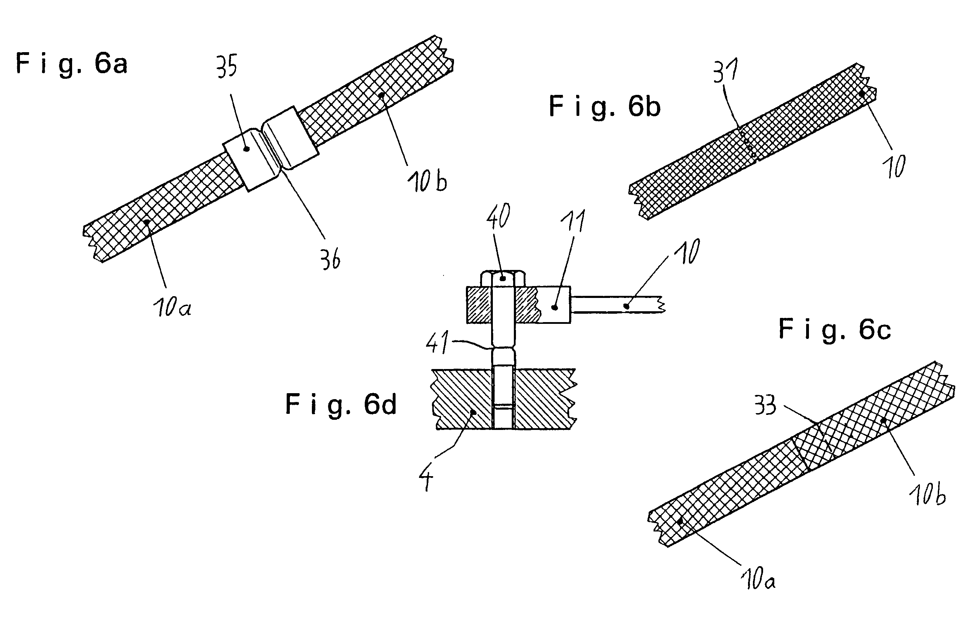

Um dieses Problem zu beseitigen, sind verschiedene Mittel denkbar, mit denen im Bedarfsfall die Spannung aus der Straffleine herausgenommen werden kann. Verschiedene Ausführungsbeispiele derartiger Mittel sind in den Figuren 6a bis 6d dargestellt.

Gemäß Fig. 6a besteht die Straffleine aus zwei Abschnitten 10a, 10b, die über ein mit einer Sollbruchstelle 36 versehenes Kunststoffelement 35 miteinander verbunden sind. Die Sollbruchstelle 36 ist dabei derart gestaltet, daß das Kunststoffelement 35 den beim Aufblasen des Gassackes an der Straffleine auftretenden Kräften standhalten kann. Wird demgegenüber mit größeren Kräften versucht, die Fahrzeugtür zu öffnen oder den Gassack von der Fensterscheibe zu entfernen, so bricht das Kunststoffelement 35 an der Sollbruchstelle 36, und die Straffleine bildet dann kein Hindernis mehr.

Derselbe Effekt kann erzielt werden, wenn die Straffleine 10 gemäß Fig. 6b mit einer Perforation 31 versehen wird oder wenn sie gemäß Fig. 6c zwei Abschnitte 10a, 10b aufweist, die entlang einer Naht 33 miteinander vernäht sind, wobei die Perforation 31 bzw. die Naht 33 den beim Aufblasen des Gassackes auftretenden Kräften standhalten können. Durch das Aufbringen entsprechend größerer Kräfte reißt jedoch die Straffleine im Bereich der Perforation 31 bzw. der Naht 33.

Gemäß Fig. 6d ist die Straffleine 10 an einer Befestigungsstelle 11 über ein Befestigungselement 40 an der Fahrzeugkarosserie 4 befestigt, das eine Sollbruchstelle 41 aufweist. Auch diese ist so gestaltet, daß sie den beim Aufblasen des Gassackes an der Straffleine 10 auftretenden Kräften standhalten kann, während bei entsprechend größeren Kräften das Befestigungselement 40 an der Sollbruchstelle 40 bricht.

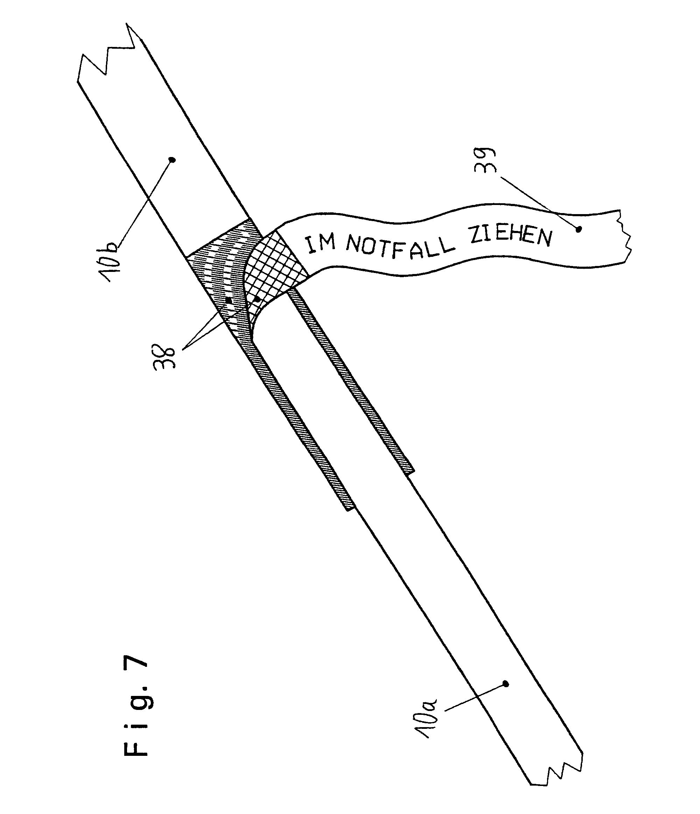

In einem weiteren Ausführungsbeispiel gemäß Fig. 7 besteht die Straffleine wiederum aus zwei Abschnitten 10a, 10b, die über einen Klettverschluß 39 miteinander verbunden sind. Ein Abschnitt 10a der Straffleine weist darüber hinaus ein Zugband 39 auf, mit dem im Notfall der Klettverschluß 38 gelöst werden kann.

## Patentansprüche

1. Aufblasbarer Gassack für eine Airbageinheit mit mindestens einer Straffleine (10), die an einer Fahrzeugkarosserie befestigbar und beim Aufblasen des Gassackes (1) straffbar ist und die die Ausbreitung des Gassackes (1) beim Aufblasen begrenzt, wobei die Straffleine (10) in mindestens einem Bereich derart mit dem Gassack (1) in Wirkverbindung steht, daß sich beim Aufblasen des Gassackes (1) die Straffleine (10) und der Gassack (1) in diesem Bereich entlang einer ersten Richtung (F) relativ zueinander bewegen können und daß nach dem Aufblasen des Gassackes eine Relativbewegung von Straffleine und Gassack entlang einer der ersten Richtung im wesentlichen entgegengesetzten zweiten Richtung (S) verhindert wird,
**dadurch gekennzeichnet,**
**daß** die Straffleine (10) und der Gassack (1) über mindestens ein Haftflächenpaar (7, 17; 8, 18; 107, 117; 108, 118) zuammenwirken und daß das Haftflächenpaar (7, 17; 8, 18; 107, 117; 108, 118) zwei Flächenelemente in Form einer Hakenfläche (7, 8, 107, 108) und einer Gegenfläche (17, 18, 117, 118) umfaßt, von denen die eine dem Gassack (1) und die andere der Straffleine (10) zugeordnet ist und die bei der Relativbewegung entlang der ersten Richtung (F) aneinander vorbei gleiten, während sie bei der Relativbewegung entlang der zweiten Richtung (S) miteinander in Eingriff treten.

2. Gassack nach Anspruch 1, **dadurch gekennzeichnet, daß** die Haken (109) der Hakenfläche (107, 108) derart geneigt in Bezug auf die Gegenfläche (117, 118) verlaufen, daß sie bei der Relativbewegung entlang der ersten Richtung (F) über die Gegenfläche (117, 118) gleiten, während sie bei der Relativbewegung entlang der zweiten Richtung (S) in die Gegenfläche (117, 118) eingreifen.

3. Gassack nach Anspruch 1, **dadurch gekennzeichnet, daß** zwischen den beiden Flächenelementen (7, 17; 8, 18) ein Gleitelement (20) verläuft, das eine Relativbewegung der Flächenelemente (7, 17; 8, 18) entlang der ersten Richtung (F) gestattet und auf das bei einer Relativbewegung entlang der zweiten Richtung (S) eines der Flächenelemente oder ein mit dem Flächenelement bewegbares Teil derart einwirkt, daß das Gleitelement (20) deformiert und/oder verschoben wird und die beiden Flächenelemente (7, 17; 8, 18) miteinander in Eingriff treten können.

4. Gassack nach Anspruch 3, **dadurch gekennzeichnet, daß** aufgrund der Relativbewegung entlang der ersten Richtung (F) das der Straffleine (10) zugeordnete Flächenelement (17, 18) zumindest teilweise hinter das Gleitelement (20) führbar ist und daß bei der Relativbewegung entlang der zweiten Richtung (S) nach dem Aufblasen des Gassackes (1) das der Straffleine (10) zugeordnete Flächenelement (17, 18) auf das Gleitelement (20) einwirkt.

5. Gassack nach Anspruch 3 oder 4, **dadurch gekennzeichnet, daß** das Gleitelement (20) beim Aufblasen des Gassakkes (1) von dem dem Gassack (1) zugeordneten Flächenelement (7, 8) gegen das der Straffleine (10) zugeordnete Flächenelement (17, 18) gedrückt wird.

6. Gassack nach einem der Ansprüche 3 bis 5, **dadurch gekennzeichnet, daß** das Gleitelement (20) zumindest in einem Abschnitt (22) einen Anschlag (21) aufweist, um die Deformation des Gleitelements (20) zu erleichtern.

7. Gassack nach einem der Ansprüche 3 bis 6, **dadurch gekennzeichnet, daß** das Gleitelement (20) als Gleithülle ausgebildet ist.

8. Gassack nach einem der vorhergehenden Ansprüche, **dadurch gekennzeichnet, daß** auf der Straffleine (10) zwei Flächenelemente (17, 18; 117, 118) angeordnet sind, deren mit Haftelementen (19; 119) versehene Oberflächen in entgegengesetzte Richtungen weisen und denen jeweils ein Flächenelement (7, 8; 107, 108) auf dem Gassack (1) zugeordnet ist.

9. Gassack nach einem der vorhergehenden Ansprüche, **dadurch gekennzeichnet, daß** die Oberfläche des Gassakkes (1) mit einer Tasche (6) versehen ist, in der das dem Gassack (1) zugeordnete Flächenelement (7, 8; 107, 108) angeordnet ist.

10. Gassack nach einem der vorhergehenden Ansprüche, **dadurch gekennzeichnet, daß** die Straffleine (10) an mindestens einer Stelle (12) fest mit dem Gassack (1) verbunden ist.

11. Gassack nach einem der vorhergehenden Ansprüche, **dadurch gekennzeichnet, daß** an der Straffleine (10) Mittel (31, 33, 35, 38, 41) vorgesehen sind, um nach dem Aufblasen des Gassackes (1) die Spannung aus der Straffleine (10) herausnehmen zu können.

12. Gassack nach Anspruch 11, **dadurch gekennzeichnet, daß** die Straffleine (10) und/oder ein Befestigungsmittel (40), das zur Befestigung der Straffleine (10) dient, mit einem Schwächungsbereich (31, 33; 41) versehen ist, der den beim Aufblasen des Gassackes (1) auftretenden Kräften standhalten kann.

13. Gassack nach Anspruch 12, **dadurch gekennzeichnet, daß** der Schwächungsbereich (31, 33, 41) als Sollbruchstelle ausgebildet ist.

14. Gassack nach Anspruch 11, **dadurch gekennzeichnet, daß** ein lösbares Befestigungsmittel (38) vorgesehen ist, über das die Straffleine (10) an einem weiteren Bauelement oder zwei Teile der Straffleine (10) untereinander verbindbar sind.

## Claims

1. Inflatable airbag for an airbag unit, with at least one tautening cord (10) which can be fastened to a vehicle body and can be tautened during the inflation of the airbag (1) and which limits the spread of the airbag (1) during inflation, the tautening cord (10) being operatively connected to the airbag (1) in at least one region, in such a way that, during the inflation of the airbag (1), the tautening cord (10) and the airbag (1) can move relative to one another, in this region, in a first direction (F), and in such a way that, after the inflation of the airbag, a relative movement of the tautening cord and airbag in a second direction (S) essentially opposite the first direction is prevented, **characterized in that** the tautening cord (10) and the airbag (1) cooperate via at least one pair of adhesive faces (7, 17; 8, 18; 107, 117; 108, 118), and **in that** the pair of adhesive faces (7, 17; 8, 18; 107, 117; 108, 118) comprise two face elements in the form of a hook face (7, 8, 107, 108) and of a counterface (17, 18, 117, 118), of which one is assigned to the airbag (1) and the other to the tautening cord (10) and which slide past one another during the relative movement in the first direction (F), while they come into engagement with one another during the relative movement in the second direction (S) .

2. Airbag according to claim 1, **characterized in that** the hooks (109) of the hook face (107, 108) run at an inclination with respect to the counterface (117, 118) such that they slide over the counterface (117, 118) during the relative movement in the first direction (F), while they engage into the counterface (117, 118) during the relative movement in the second direction (S).

3. Airbag according to claim 1, **characterized in that** between the two face elements (7, 17; 8, 18) runs a sliding element (20) which allows a relative movement of the face elements (7, 17; 8, 18) in the first direction (F) and on which one of the face elements or a part movable together with the face element acts during a relative movement in the second direction (S), in such a way that the sliding element (20) is deformed and/or displaced and the two face elements (7, 17; 8, 18) can come into engagement with one another.

4. Airbag according to claim 3, **characterized in that**, as a result of the relative movement in the first direction (F), the face element (17, 18) assigned to the tautening cord (10) can be guided at least partially behind the sliding element (20), and **in that**, during the relative movement in the second direction (S) after the inflation of the airbag (1), the face element (17, 18) assigned to the tautening cord (10) acts on the sliding element (20).

5. Airbag according to claim 3 or 4, **characterized in that**, during the inflation of the airbag (1), the sliding element (20) is pressed by the face element (7, 8) assigned to the airbag (1) against the face element (17, 18) assigned to the tautening cord (10).

6. Airbag according to one of claims 3 to 5, **characterized in that** the sliding element (20) has an abutment (21) at least in one portion (22), in order to make it easier for the sliding element (20) to undergo deformation.

7. Airbag according to one of claims 3 to 6, **characterized in that** the sliding element (20) is designed as a sliding sleeve.

8. Airbag according to one of the preceding claims, **characterized in that** the tautening cord (10) has arranged on it two face elements (17, 18; 117, 118), of which the surfaces provided with adhesive elements (19; 119) face in opening directions and which are each assigned a face element (7, 8; 107, 108) on the airbag (1).

9. Airbag according to one of the preceding claims, **characterized in that** the surface of the airbag (1) is provided with a pocket (6), in which the face element (7, 8; 107, 108) assigned to the airbag (1) is arranged.

10. Airbag according to one of the preceding claims, **characterized in that** the tautening cord (10) is firmly connected to the airbag (1) at at least one point (12).

11. Airbag according to one of the preceding claims, **characterized in that** means (31, 33, 35, 38, 41) are provided on the tautening cord (10), so that, after the inflation of the airbag (1), the tension can be removed from the tautening cord (10).

12. Airbag according to claim 11, **characterized in that** the tautening cord (10) and/or a fastening means (40), which serves for fastening the tautening cord (10), is provided with a weakening region (31, 33; 41) which can withstand the forces occurring during the inflation of the airbag (1).

13. Airbag according to claim 12, **characterized in that** the weakening region (31, 33, 41) is designed as a predetermined breaking point.

14. Airbag according to claim 11, **characterized in that** a releasable fastening means (38) is provided, via which the tautening cord (10) can be connected to a further structural element or two parts of the tautening cord (10) can be connected to one another.

## Revendications

1. Sac à gaz gonflable pour ensemble d'airbag comportant au moins un cordeau tendeur (10) qui est susceptible d'être fixé sur la carrosserie d'un véhicule automobile et d'être tendu lors du gonflage du sac à gaz (1) et qui limite le déploiement du sac à gaz (1) lors du gonflage, le cordeau tendeur (10) étant en liaison fonctionnelle avec le sac à gaz (1) dans au moins une zone, de telle sorte que lors du gonflage du sac à gaz (1) le cordeau tendeur (10) et le sac à gaz (1) puissent se déplacer l'un par rapport à l'autre dans cette zone suivant une première direction (F), et qu'après gonflage du sac à gaz soit empêché un mouvement relatif du cordeau tendeur et du sac à gaz suivant une deuxième direction (S) sensiblement opposée à la première direction,
**caractérisé en ce que**
le cordeau tendeur (10) et le sac à gaz (1) coopèrent via au moins une paire de surfaces adhérentes (7, 17 ; 8, 18 ; 107, 117 ; 108, 118), et **en ce que** la paire de surfaces adhérentes (7, 17 ; 8, 18 ; 107, 117 ; 108, 118) comprend deux éléments de surface sous la forme d'une surface à crochets (7, 8, 107, 108) et d'une contre-surface (17, 18, 117, 118), dont l'une est associée au sac à gaz (1) et dont l'autre est associée au cordeau tendeur (10) et qui glissent l'une le long de l'autre lors d'un mouvement relatif suivant la première direction (F), tandis qu'elles viennent en engagement mutuel lors du mouvement relatif suivant la deuxième direction (S).

2. Sac à gaz gonflable selon la revendication 1, **caractérisé en ce que** les crochets (109) de la surface à crochets (107, 108) s'étendent sous une inclinaison par rapport à la contre-surface (117, 118) de telle sorte que lors du mouvement relatif suivant la première direction (F) ils glissent par-dessus la contre-surface (117, 118), tandis que lors du mouvement relatif suivant la deuxième direction (S) ils s'engagent dans la contre-surface (117, 118).

3. Sac à gaz selon la revendication 1, **caractérisé en ce qu'**un élément de glissement (20) s'étend entre les deux éléments de surface (7, 17 ; 8, 18), qui permet un mouvement relatif des éléments de surface (7, 17 ; 8, 18) suivant la première direction (F) et sur lequel agit, lors d'un mouvement relatif suivant la deuxième direction (S), l'un des éléments de surface ou une pièce mobile avec l'élément de surface, de telle sorte que l'élément de glissement (20) est déformé et/ou déplacé et que les deux éléments de surface (7, 17 ; 8, 18) peuvent venir en engagement mutuel.

4. Sac à gaz selon la revendication 3, **caractérisé en ce qu'**en raison du mouvement relatif suivant la première direction (F), l'élément de surface (17, 18) associé au cordeau tendeur (10) est susceptible d'être amené au moins partiellement en arrière de l'élément de glissement (20) et que lors d'un mouvement relatif suivant la deuxième direction (S), après gonflage du sac à gaz (1), l'élément de surface (17, 18) associé au cordeau tendeur (10) agit sur l'élément de glissement (20).

5. Sac à gaz selon la revendication 3 où 4, **caractérisé en ce que** lors du gonflage du sac à gaz (1), l'élément de glissement (20) est pressé contre l'élément de surface (17, 18) associé au cordeau tendeur (10) par l'élément de surface (7, 8) associé au sac à gaz (1).

6. Sac à gaz selon l'une des revendications 3 à 5, **caractérisé en ce que** l'élément de glissement (20) comprend une butée (21) dans au moins un tronçon (22) afin de faciliter la déformation de l'élément de glissement (20).

7. Sac à gaz selon l'une des revendications 3 à 6, **caractérisé en ce que** l'élément de glissement (20) est réalisé sous forme de gaine de glissement.

8. Sac à gaz selon l'une des revendications précédentes, **caractérisé en ce que** deux éléments de surface (17, 18 ; 117, 118) sont agencés sur le cordeau tendeur (10), dont les surfaces pourvues d'éléments d'adhésion (19 ; 119) sont dirigées dans des directions opposées et auxquels sont associés un élément de surface respectif (7, 8 ; 107, 108) sur le sac à gaz (1).

9. Sac à gaz selon l'une des revendications précédentes, **caractérisé en ce que** la surface du sac à gaz (1) est pourvue d'une poche (6) dans laquelle est agencé l'élément de surface (7, 8 ; 107, 108) associé au sac à gaz (1).

10. Sac à gaz selon l'une des revendications précédentes, **caractérisé en ce que** le cordeau tendeur (10) est fermement relié au sac à gaz (1) à au moins un endroit (12).

11. Sac à gaz selon l'une des revendications précédentes, **caractérisé en ce que** des moyens (31, 33, 35, 38, 41) sont prévus sur le cordeau tendeur (10), afin de pouvoir supprimer la tension du cordeau tendeur (10) après gonflage du sac à gaz (1).

12. Sac à gaz selon la revendication 11, **caractérisé en ce que** le cordeau tendeur (10) et/ou un moyen de fixation (40) servant à fixer le cordeau tendeur (10) est pourvu d'une zone d'affaiblissement (31, 33 ; 41) qui peut résister aux forces qui apparaissent lors du gonflage du sac à gaz (1).

13. Sac à gaz selon la revendication 12, **caractérisé en ce que** la zone d'affaiblissement (31, 33, 41) est réalisée sous forme d'emplacement de rupture.

14. Sac à gaz selon la revendication 11, **caractérisé en ce qu'**il est prévu un moyen de fixation détachable (38) via lequel le cordeau tendeur (10) peut être relié à un autre composant ou via lequel deux parties du cordeau tendeur (10) peuvent être reliées l'une à l'autre.
